# EUROPEAN PATENT APPLICATION

(11) **EP 3 220 230 A1**
(43) Date of publication of application: **20.09.2017**
(21) Application number: 15869753.2
(22) Date of filing: 25.11.2015
(51) Int. Cl.: G06F 1/20, F24F 11/02

(54) **DATA OUTPUT DEVICE, DATA OUTPUT SYSTEM, CONTROL METHOD, AND PROGRAM**

(30) Priority: 18.12.2014 JP 2014256038
(71) Applicant: Mitsubishi Heavy Industries Thermal Systems, Ltd., Minato-ku Tokyo 108-8215 (JP)
(72) Inventor: KAMBE Taiga, Tokyo 108-8215 (JP); INABA Takashi, Tokyo 108-8215 (JP); MORIKAWA Junji, Tokyo 108-8215 (JP)
(74) Representative: Intès, Didier Gérard André
(86) International application number: PCT/JP2015/083095
(87) International publication number: WO 2016/098545

(57) **Abstract**

Provided is a data output device including a data reception unit that is connected to an air conditioner and acquires internal log data from a controller of the air conditioner, an output condition setting unit that acquires an output condition which is set on the basis of a user's operation to thereby change the output condition stored in a storage unit in advance, an output determination unit that compares a condition value included in the output condition with the acquired internal log data to thereby determine whether or not the output condition is satisfied, and an external output unit that outputs a notification signal in a case where the output determination unit determines that the output condition is satisfied.

## Description

### Technical Field

The present invention relates to a data output device of an air conditioner, a data output system, a control method, and a program.

Priority is claimed on Japanese Patent Application No. 2014-256038, filed on December 18,2014, the content of which is incorporated herein by reference.

### Background Art

Air conditioners that transmit a signal from a connector terminal included in a device in a case where an abnormality is stopped, a case where an operation integrated time of a compressor exceeds a predetermined time, and the like are known. In such an air conditioner, output conditions for transmitting the signal from the connector terminal are determined in advance, and the connector terminal is provided for each output condition in many cases.

In PTL 1 disclosing the related art, a general-purpose data logger is disclosed which determines whether or not an input signal from a sensor satisfies an alarm condition which is set in advance, and instructs a PC connected to the device to execute a specific program based on the alarm condition in a case where the input signal satisfies the alarm condition.

### Citation List

### Patent Literature

[PTL 1] Japanese Unexamined Patent Application, First Publication No. H11-296556

### Summary of Invention

### Technical Problem

It is preferable that a signal transmission function in the air conditioner can be set in accordance with a user's use environment. However, the above-described signal transmission function of the related art does not satisfy all users' requests due to output conditions being determined for each type of air conditioner. When there is an attempt to satisfy a user's request, it is necessary to develop a program in response to the request every time, which results in an increase in cost. In addition, when there is an attempt to respond to a user's request by increasing the number of connector terminals for external output, a substrate is increased in size, and thus there is a possibility of a cost increase.

The present invention provides a data output device, a data output system, a control method, and a program which are capable of solving the above-described problem.

### Solution to Problem

According to a first aspect of the present invention, a data output device includes a data reception unit that is connected to an air conditioner and acquires internal log data from a controller of the air conditioner, an output condition setting unit that acquires an output condition which is set on the basis of a user's operation to thereby change the output condition stored in a storage unit in advance, an output determination unit that compares a condition value included in the output condition with the acquired internal log data to thereby determine whether or not the output condition is satisfied, and an external output unit that outputs a notification signal in a case where the output determination unit determines that the output condition is satisfied.

According to a second aspect of the present invention, the output condition setting unit may acquire a plurality of different output conditions, and the output determination unit may perform the determination on each of the plurality of different output conditions with respect to the acquired internal log data.

According to a third aspect of the present invention, the data output device may further include an output port setting unit that acquires setting for allocating at least one of output ports included in the data output device as an output port for outputting the notification signal in a case where the output condition is satisfied, in which the external output unit may output the notification signal for the output condition through the allocated output port by the output port setting unit in a case where the output determination unit determines that the output condition is satisfied.

According to a fourth aspect of the present invention, a data output system includes the data output device according to any one of the first to third aspects, and a data setting device that is detachably connected to the data output device, in which the data setting device includes a setting reception unit that receives an input of the output condition, and an output unit that outputs the condition value included in the output condition to the data output device.

According to a fifth aspect of the present invention, a control method includes causing a data output device, which is connected to an air conditioner, to acquire internal log data from a controller of the air conditioner, to acquire an output condition which is set on the basis of a user's operation to thereby change the output condition stored in a storage unit in advance, to compare a condition value included in the output condition with the acquired internal log data to thereby determine whether or not the output condition is satisfied, and to output a notification signal in a case where it is determined in the determination that the output condition is satisfied.

According to a sixth aspect of the present invention, a program causes a computer of a data output device to function as means, which is connected to an air conditioner, for acquiring internal log data from a controller of the air conditioner, means for acquiring an output condition which is set on the basis of a user's operation to thereby change the output condition stored in a storage unit in advance, means for comparing a condition value included in the output condition with the acquired internal log data to thereby determine whether or not the output condition is satisfied, and means for outputting a notification signal in a case where it is determined in the determination that the output condition is satisfied.

### Advantageous Effects of Invention

According to the above-described data output device, data output system, control method, and program, it is possible to output an external output signal according to a user's request without causing an increase in the size of a substrate provided in an air conditioner and developing a new program.

### Brief Description of Drawings

FIG. 1 is a schematic diagram illustrating an example of a data output device connected to an air conditioner according to an embodiment of the present invention.
FIG. 2 is a schematic functional block diagram illustrating an example of the data output device according to the embodiment of the present invention.
FIG. 3 is a schematic functional block diagram illustrating an example of a data setting device according to the embodiment of the present invention.
FIG. 4 is a first diagram illustrating an example of a processing flow of the data setting device according to the embodiment of the present invention.
FIG. 5 is a diagram illustrating an example of output conditions according to the embodiment of the present invention.
FIG. 6 is a second diagram illustrating an example of a processing flow of the data setting device according to the embodiment of the present invention.
FIG. 7 is a diagram illustrating an example of the setting of an output port according to the embodiment of the present invention.
FIG. 8 is a diagram illustrating an example of a processing flow of the data output device according to the embodiment of the present invention.

### Description of Embodiments

### First Embodiment

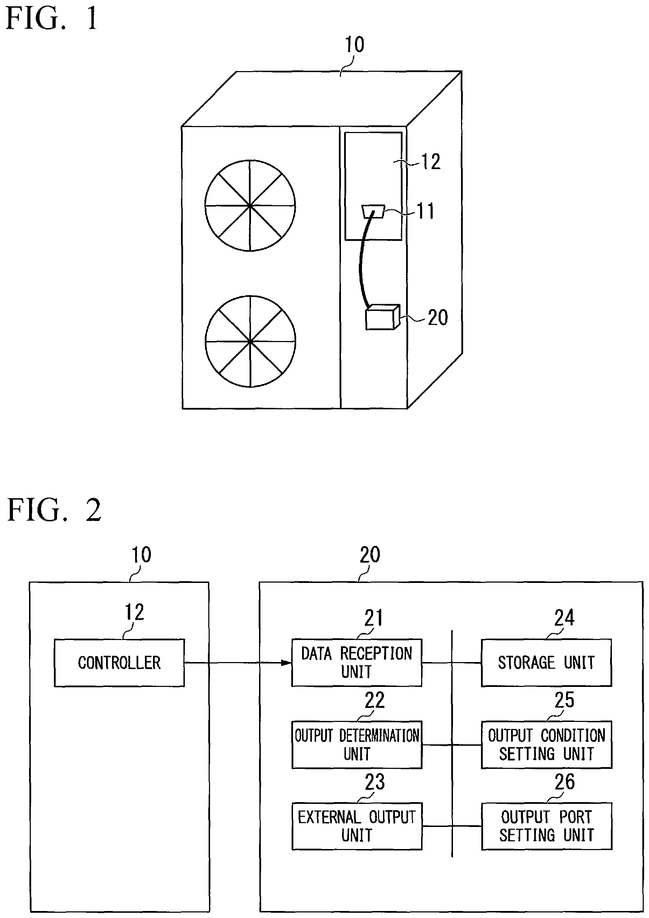

Hereinafter, a data output device according to an embodiment of the present invention will be described with reference to FIGS. 1 to 8.

FIG. 1 is a schematic diagram illustrating an example of the data output device connected to an air conditioner according to the embodiment of the present invention.

In FIG. 1, an air conditioner (outdoor unit) 10 is provided with a controller. The controller 12 collects internal log data of the air conditioner 10 and controls the air conditioner. The internal log data refers to data indicating the internal state of the air conditioner 10 which is necessary for the control and monitoring of the air conditioner 10. The internal log data refers to detection information such as outside air temperature, the pressure of a refrigerant gas, the temperature of a compressor or a fuel exchanger, the number of motor revolutions, and the like. The air conditioner 10 is provided with an external interface 11 capable of performing data communication with an external device. The internal log data collected by the controller 12 can be output to the external device through the external interface 11. The external interface 11 is based on, for example, RS232-C. The external interface 11 is generally included in the air conditioner 10, and is used to be connected to a monitoring system, a PC, a data logger, and the like. In this embodiment, a data output device 20 is connected to the external interface 11. The data output device 20 acquires internal log data of the air conditioner 10, determines the acquired internal log data, and outputs a notification signal indicating that the internal log data satisfying a predetermined condition has been detected, when the internal log data satisfies the condition.

The data output device 20, which is connected to the air conditioner 10, is a device that acquires the internal log data of the air conditioner 10 and performs external output in a case where the internal log data includes data satisfying a predetermined condition. The data output device 20 is a device which is detachable from and independent of the air conditioner 10. The data output device 20 includes an external interface based on, for example, RS232-C as an input port. The data output device 20 acquires internal log data from the controller 12 of the air conditioner 10 through the input port. The data output device 20 compares a plurality of output conditions determined in advance with the acquired internal log data, and outputs a notification signal indicating that the internal log data satisfying the output conditions has been detected, in a case where the internal log data satisfies the output conditions. In a case of the related art, for example, output ports 1 to 3 are provided in the air conditioner 10, and an output terminal is provided for each output condition such that the controller 12 outputs an alarm signal from the output port 1 when an outside air temperature is set to be equal to or greater than X, outputs an alarm signal from the output port 2 when the number of motor revolutions is set to be equal to or greater than Y, and outputs an alarm signal from the output port 3 when the pressure of a refrigerant gas is set to be equal to or greater than Z. The data output device 20 of this embodiment acquires internal log data of the air conditioner 10 through the external interface 11, determines the acquired internal log data for one or a plurality of output conditions, and outputs a notification signal in a case where the output conditions are satisfied. Thereby, it is not necessary to provide an output terminal in the air conditioner 10 for each output condition or develop a dedicated program based on the output conditions. Since the data output device 20 normally uses an external interface provided in an air conditioner, it is not necessary to apply some treatment to the air conditioner side, and there is an advantage in that unnecessary time and cost are not required for the expansion of external output.

The data output device 20 includes one or a plurality of output ports such as an external contact output terminal, and outputs an on signal when the internal log data satisfies the output conditions. For example, one of the output ports and an alarm lamp are connected to each other, and thus the data output device 20 can turn on the alarm lamp when an abnormality is detected and can notify a maintenance worker or the like of the abnormality in real time. In a case where the data output device 20 includes a plurality of output ports, the data output device can output a notification signal from a different output port for each output condition.

The data output device 20 can store the internal log data acquired from the controller 12 in a storage unit. The data output device 20 includes an output port such as a local area network (LAN) and is connected to a PC through the LAN, and thus the maintenance worker can confirm the log of the internal log data stored in the data output device 20 by using the PC or the like.

FIG. 2 is a schematic functional block diagram illustrating an example of the data output device according to the embodiment of the present invention.

The data output device 20 is, for example, a microcomputer, and includes at least a data reception unit 21, an output determination unit 22, an external output unit 23, a storage unit 24, an output condition setting unit 25, and an output port setting unit 26 as illustrated in FIG. 2. The data output device 20 is communicably connected to the controller 12 of the air conditioner 10.

The data reception unit 21 acquires internal log data of the air conditioner 10 from the controller 12.

The output determination unit 22 compares a condition value which is set in advance with the acquired internal log data to determine whether or not output conditions are satisfied.

The external output unit 23 outputs a notification signal for giving notice of the detection of data satisfying the output conditions in a case where the output determination unit 22 determines that the data satisfies the output conditions.

The storage unit 24 stores the internal log data acquired by the data reception unit 21, a condition value used for the determination of output, and the like. The storage unit 24 is, for example, a flash memory, a secure digital (SD) memory card, or the like.

The output condition setting unit 25 acquires new output conditions, and updates the output conditions written in the storage unit 24 to the new output conditions.

The output port setting unit 26 acquires setting information regarding from which output port a notification signal corresponding to which output condition is output, for the output ports included in the data output device, and writes the acquired setting information in the storage unit 24.

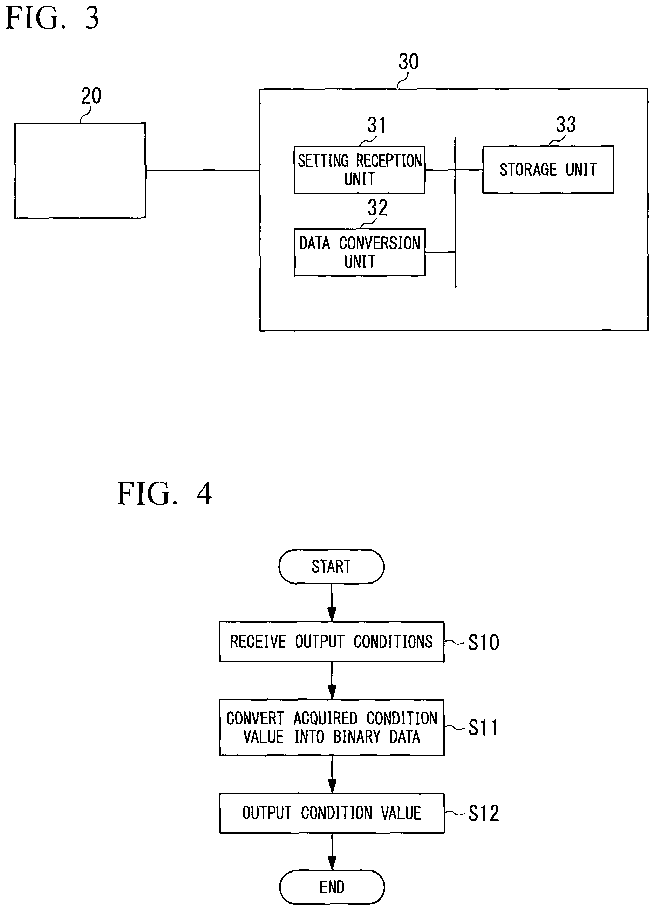

FIG. 3 is a schematic functional block diagram illustrating an example of the data setting device according to the embodiment of the present invention.

In FIG. 3, the data setting device 30 is, for example, a PC. The data setting device 30 is connected to the data output device 20, and is used in a case where the output determination unit 22 sets a condition value used for the determination of output or sets an output port for outputting notification information.

As illustrated in FIG. 3, the data setting device 30 includes at least a setting reception unit 31, a data conversion unit 32, and a storage unit 33. The data setting device 30 is communicably connected to the data output device 20 as necessary.

The setting reception unit 31 receives a maintenance worker's operation of setting output conditions and an output port.

The data conversion unit 32 converts a condition value included in the output condition received by the setting reception unit 31 from text data to binary data, and outputs the converted value to the data output device 20.

The storage unit 33 stores setting information received by the setting reception unit 31.

FIG. 4 is a first diagram illustrating an example of a processing flow of the data setting device according to the embodiment of the present invention.

A process of performing the setting of output conditions on the data output device 20 in the data setting device 30 will be described with reference to FIG. 4.

It is premised that the data setting device 30 and the data output device 20 are communicably connected to each other.

First, when a maintenance worker performs the setting of output conditions. Then, the setting reception unit 31 receives an input of the output conditions based on the maintenance worker's setting operation (step S10). The setting reception unit 31 outputs the received output conditions to the data conversion unit 32. As described later, the output conditions include information of a parameter to be monitored, a condition value, and a determination method. At this time, the condition value which is output to the data conversion unit 32 is text data. Next, the data conversion unit 32 converts the acquired condition value into binary data (step S11). The data conversion unit 32 converts the text data set by the maintenance worker into the binary data because internal log data which is output by the air conditioner 10 is binary data. Since the data output device 20 performs the determination of output by comparing the internal log data acquired from the air conditioner 10 with the condition value converted into binary data, and thus it is possible to reduce the load of processing. The data conversion unit 32 outputs output conditions including the converted binary data to the data output device 20 through communication means such as a LAN (step S12). In the data output device 20, the output condition setting unit 25 acquires new output conditions, and updates the existing output conditions stored in the storage unit 24 (memory) to the acquired new output conditions.

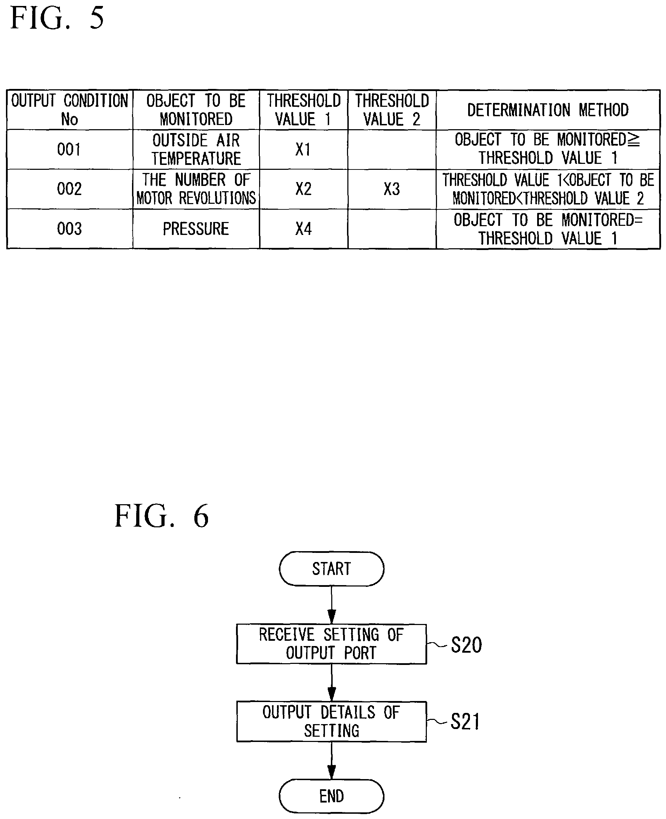

FIG. 5 is a diagram illustrating an example of output conditions according to the embodiment of the present invention.

The condition value used for the determination of output, and the like are written in the storage unit 24 by the processing described in FIG. 3.

FIG. 5 illustrates an example of the written condition value. For example, the storage unit 24 stores a table having items of "output condition No", "object to be monitored", "threshold value 1", "threshold value 2", and "determination method", and output conditions that are set using the data setting device 30 are stored in the table. In the "output condition No", identification information for the output conditions is set. In the "object to be monitored", a type of parameter to be monitored (for example, the number of motor revolutions) is set. In the "threshold value 1" and the "threshold value 2", condition values used for the determination of output are set. Two items for setting a condition value are provided because the items are used for the determination of a range. Meanwhile, threshold values X1 to X4 are binary data. In the "determination method", a determination method using signs of equality and inequality is set.

For example, data of a first row in FIG. 5 indicates a setting example of an output condition in a case where the output determination unit 22 determines that the output condition is satisfied when "outside air temperature of internal log data≥X1".

A second row is a setting example of an output condition in a case where the output determination unit 22 determines that the output condition is satisfied when "X2<the number of motor revolutions of internal log data<X3".

A third row is a setting example of an output condition in a case where the output determination unit 22 determines that the output condition is satisfied when "pressure of internal log data=X4".

As described above with reference to FIGS. 3 and 4, a maintenance worker can arbitrarily set output conditions in the data output device 20 in response to a request from a user of the air conditioner 10.

FIG. 6 is a second diagram illustrating an example of a processing flow of the data setting device according to the embodiment of the present invention.

A process of performing the setting of an output port on the data output device 20 in the data setting device 30 will be described with reference to FIG. 6.

It is premised that the data setting device 30 and the data output device 20 are communicably connected to each other. It is assumed that the data output device 20 is provided with two output ports (output port 1 and output port 2).

First, a maintenance worker performs the setting of an output port. For example, in a case where the output conditions of FIG. 5 are set, the input of setting for allocating output condition No=001 (output condition of outside air temperature) and 002 (output condition of the number of motor revolutions) to the output port 1 and allocating output condition No=003 (output condition regarding pressure) to the output port 2 is performed. Then, the setting reception unit 31 receives the input of setting (step S20), and outputs the received setting information of the output ports to the data output device 20 through communication means such as a LAN (step S21). In the data output device 20, the output condition setting unit 25 acquires the setting information of the output ports and writes the acquired setting information in the storage unit 24 (memory).

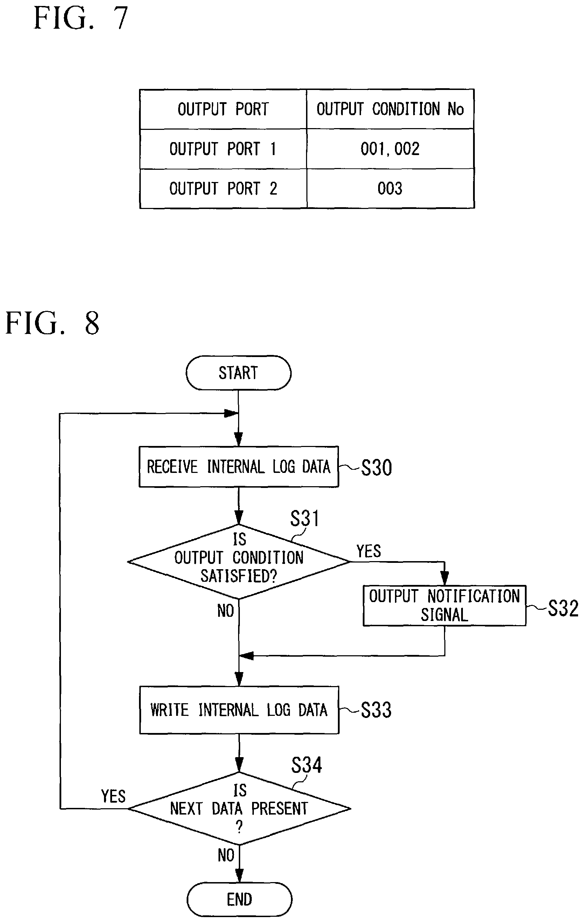

FIG. 7 is a diagram illustrating an example of the setting of an output port according to the embodiment of the present invention.

Setting values of the output ports are written in the storage unit 24 by the processing described in FIG. 6. FIG. 7 illustrates an example of the setting values of the output ports. For example, a table having items of "output port" and "output condition No" is stored in the storage unit 24, and output conditions that are set using the data setting device 30 are stored in the table.

In the "output port", identification information of the output ports provided in the data output device 20 is set. In the "output condition No", identification information of output conditions allocated to the output ports is set.

For example, data of a first row in FIG. 7 indicates that a notification signal is output from the output port 1 in a case where output condition No=001 and 002 is satisfied.

Data of a second row indicates that a notification signal is output from the output port 2 in a case where output condition No=003 is satisfied.

The output ports are allocated in accordance with the output conditions, and a different alarm device is connected to the tip of each output port, whereby a maintenance worker can know that data satisfying which output condition has been detected. In addition, for example, all output conditions are respectively allocated to all of the output ports, and the alarm devices connected to the respective output ports are disposed at different positions, whereby notification signals can be simultaneously transmitted to a plurality of locations, which leads to an improvement in convenience.

In a case where a signal other than on and off signals can be output from the output ports, a signal based on output condition No may be output from the output port to which a plurality of output conditions No are allocated.

FIG. 8 is a diagram illustrating an example of a processing flow of the data output device according to the embodiment of the present invention.

A flow of an output determination process performed by the data output device 20 will be described with reference to FIG. 8.

It is premised that the output conditions as illustrated in FIG. 5 and the setting of the output ports as illustrated in FIG. 7 are stored in the storage unit 24 of the data output device 20. It is assumed that the data output device 20 is connected to the external interface 11 provided in the air conditioner 10 through a connector, and the controller 12 outputs internal log data to the data output device 20 through the external interface 11.

First, the data reception unit 21 acquires the internal log data from the controller 12 (step S30). The data reception unit 21 outputs the internal log data to the output determination unit 22.

Next, the output determination unit 22 reads out all of the output conditions from the storage unit 24. For example, the output determination unit 22 reads out "outside air temperature" as an object to be monitored, "X1" as a condition value (threshold value 1), and "object to be monitored ≥ threshold value 1" as a determination method. In a case where another output condition is set, the output determination unit 22 similarly reads out the output condition. The output determination unit 22 acquires a type of parameter to be monitored (outside air temperature or the like) from the read-out output condition. Next, the output determination unit 22 extracts data indicating an outside air temperature from the internal log data. For example, regarding the data indicating an outside air temperature in the internal log data, a data format specifying setting in first and second bytes is determined in advance, and the output determination unit 22 extracts data to be determined in accordance with the data format. In a case where a plurality of output conditions are set, the output determination unit 22 performs the extraction of data to be determined on all of the output conditions. Meanwhile, the data extracted by the output determination unit 22 is binary data.

Next, the output determination unit 22 determines whether or not the binary data acquired from the internal log data satisfies the output conditions acquired from the storage unit 24 (step S31). For example, the output determination unit 22 substitute binary data corresponding to the extracted outside air temperature to be determined and the value of the read-out condition value (threshold value 1) for the determination method "object to be monitored ≥ threshold value 1" to determine whether or not "binary data of outside air temperature extracted from internal log data ≥ X1" is established. The pieces of binary data are compared with each other, and thus it is possible to reduce processing cost required for data conversion. Thereby, even when determination has to be performed on a plurality of output conditions, it is possible to perform the determination of the output conditions and the output of the notification signal in real time without causing a delay in processing. In a case where a plurality of output conditions are set, the output determination unit 22 also performs determination on the other output conditions.

In a case where the output conditions are satisfied (step S31; Yes), the output determination unit 22 outputs a signal indicating that output condition No and the output conditions are established to the external output unit 23. The external output unit 23 reads out information of the output port from which the acquired output condition No is output, from the table illustrated in FIG. 7 which is stored in the storage unit 24. The external output unit 23 outputs a notification signal to an external device through the read-out output port (step S32). For example, the external output unit 23 outputs a notification signal from the output port 1 on the basis of the output condition No (=001) for the output condition of the outside air temperature. In a case where an alarm lamp is connected to the output port 1, the alarm lamp is turned on to notify a maintenance worker that internal log data satisfying the set output conditions has been detected.

In a case where the output conditions are not satisfied (step S31; No) or the processing of step S32 has been completed, the output determination unit 22 adds information regarding the present time to the internal log data in a binary format which is received from the data reception unit 21 and writes the information in the storage unit 24 (step S33). Thereby, the maintenance worker having noticed an abnormality can confirm the internal log data written in the storage unit 24 and investigate the cause of the abnormality.

Next, the data reception unit 21 determines whether or not the next internal log data is output from the air conditioner 10 (step S34). In a case where the internal log data is output (step S34; Yes), the processes from step S30 are repeated. In a case where the received data is not output (step S34; No), this processing flow is terminated.

In a case where the storage capacity of the storage unit 24 is not sufficient in writing the internal log data received from the air conditioner 10 in the storage unit 24 in step S33, the process of step S34 may be performed without performing the process of step S33. When the writing cannot be performed due to the insufficient storage capacity of the storage unit 24, the output determination unit 22 determines that an abnormality has occurred, instructs the external output unit 23 to output a notification signal, and may prompt the maintenance worker to delete the internal log data written in the storage unit 24 or to replace the SD memory card.

According to the data output device 20 of this embodiment, in a case where a signal is desired to be output to the outside when the air conditioner 10 is set to be in a specific state, it is possible to output a notification signal without creating a dedicated program. Thereby, it is possible to rapidly obtain an external output function according to a user's use environment while maintaining the cost of the air conditioner. For example, the data output device 20 of this embodiment is mounted to an air conditioner lacking in an external output function, and thus it is possible to easily ascertain the operation (for example, the stop of an abnormality, or the like) of the air conditioner which cannot be ascertained until then.

According to the data output system configured to include the data output device 20 and the data setting device 30, it is possible to set any output conditions and output ports.

A process of each processing in the data output device 20 and the data setting device 30 described above is in the form of a program in a computer-readable recording medium, and the program is executed by being read out by computers of the data output device 20 and the data setting device 30, whereby the above-described processing is performed. Here, the computer-readable recording medium refers to a magnetic disk, a magneto-optical disk, a CD-ROM, a DVD-ROM, a semiconductor memory, or the like. This computer program is delivered to the computer through a communication line, and the computer having received the program executes the program.

The program may be a program for realizing a portion of the above-described functions. Further, the program may be a so-called difference file (difference program) which is capable of realizing the above-described functions in combination with a program stored in a computer system in advance.

The data output device 20 and the data setting device 30 may be constituted by one computer, or may be constituted by a plurality of computers that are communicably connected to each other.

In addition, the components in the above-described embodiment can be appropriately replaced with well-known components without departing from the scope of the present invention. The technical scope of the invention is not limited to the above-described embodiment, and various modifications can be made without departing from the scope of the present invention. Meanwhile, the data conversion unit 32 is an example of an output unit. A user is an example of a maintenance worker.

### Industrial Applicability

According to the above-described data output device, data output system, control method, and program, it is possible to output an external output signal based on a user's request without causing an increase in the size of a substrate provided in an air conditioner and performing the development of a new program.

### Reference Signs List

10: AIR CONDITIONER
11: EXTERNAL INTERFACE
12: CONTROLLER
20: DATA OUTPUT DEVICE
21: DATA RECEPTION UNIT
22: OUTPUT DETERMINATION UNIT
23: EXTERNAL OUTPUT UNIT
24: STORAGE UNIT
25: OUTPUT CONDITION SETTING UNIT
26: OUTPUT PORT SETTING UNIT
30: DATA SETTING DEVICE
31: SETTING RECEPTION UNIT
32: DATA CONVERSION UNIT
33: STORAGE UNIT

## Claims

1. A data output device comprising:
a data reception unit that is connected to an air conditioner and acquires internal log data from a controller of the air conditioner;
an output condition setting unit that acquires an output condition which is set on the basis of a user's operation to thereby change the output condition stored in a storage unit in advance;
an output determination unit that compares a condition value included in the output condition with the acquired internal log data to thereby determine whether or not the output condition is satisfied; and
an external output unit that outputs a notification signal in a case where the output determination unit determines that the output condition is satisfied.

2. The data output device according to claim 1,
wherein the output condition setting unit acquires a plurality of different output conditions, and
wherein the output determination unit performs the determination on each of the plurality of different output conditions with respect to the acquired internal log data.

3. The data output device according to claim 1 or 2, further comprising:
an output port setting unit that acquires setting for allocating at least one of output ports included in the data output device as an output port for outputting the notification signal in a case where the output condition is satisfied,
wherein the external output unit outputs the notification signal for the output condition through the allocated output port by the output port setting unit in a case where the output determination unit determines that the output condition is satisfied.

4. A data output system comprising:
the data output device according to any one of claims 1 to 3; and
a data setting device that is detachably connected to the data output device,
wherein the data setting device includes
a setting reception unit that receives an input of the output condition, and
an output unit that outputs the condition value included in the output condition to the data output device.

5. A control method comprising:
causing a data output device, which is connected to an air conditioner,
to acquire internal log data from a controller of the air conditioner,
to acquire an output condition which is set on the basis of a user's operation to thereby change the output condition stored in a storage unit in advance,
to compare a condition value included in the output condition with the acquired internal log data to thereby determine whether or not the output condition is satisfied, and
to output a notification signal in a case where it is determined in the determination that the output condition is satisfied.

6. A program causing a computer of a data output device to function as:
means, which is connected to an air conditioner, for acquiring internal log data from a controller of the air conditioner;
means for acquiring an output condition which is set on the basis of a user's operation to thereby change the output condition stored in a storage unit in advance;
means for comparing a condition value included in the output condition with the acquired internal log data to thereby determine whether or not the output condition is satisfied; and
means for outputting a notification signal in a case where it is determined in the determination that the output condition is satisfied.

## Amended claims

### Amended claims under Art. 19.1 PCT

**1.** (Amended) A data output device comprising:
a data reception unit that is connected to an air conditioner and acquires internal log data from a controller of the air conditioner;
an output condition setting unit that acquires an output condition which is set on the basis of a user's operation to thereby change the output condition stored in a storage unit in advance;
an output determination unit that compares a condition value included in the output condition with the acquired internal log data to thereby determine whether or not the output condition is satisfied;
an external output unit that outputs a notification signal in a case where the output determination unit determines that the output condition is satisfied; and
an output port setting unit that acquires setting for allocating at least one of output ports included in the device as an output port for outputting the notification signal in a case where the output condition is satisfied,
wherein the external output unit outputs the notification signal for the output condition through the allocated output port by the output port setting unit in a case where the output determination unit determines that the output condition is satisfied.

**2.** The data output device according to claim 1,
wherein the output condition setting unit acquires a plurality of different output conditions, and
wherein the output determination unit performs the determination on each of the plurality of different output conditions with respect to the acquired internal log data.

**3.** (Amended) A data output system comprising:
the data output device according to claim 1 or 2; and
a data setting device that is detachably connected to the data output device,
wherein the data setting device includes
a setting reception unit that receives an input of the output condition, and
an output unit that outputs the condition value included in the output condition to the data output device.

**4.** (Amended) A control method comprising:
causing a data output device, which is connected to an air conditioner,
to acquire internal log data from a controller of the air conditioner,
to acquire an output condition which is set on the basis of a user's operation to thereby change the output condition stored in a storage unit in advance,
to compare a condition value included in the output condition with the acquired internal log data to thereby determine whether or not the output condition is satisfied,
to acquire setting for allocating at least one of output ports included in the device as an output port for outputting the notification signal in a case where the output condition is satisfied, and
to output the notification signal for the output condition through the allocated output port in a case where it is determined that the output condition is satisfied.

**5.** (Amended)_A program causing a computer of a data output device to function as:
means, which is connected to an air conditioner, for acquiring internal log data from a controller of the air conditioner;
means for acquiring an output condition which is set on the basis of a user's operation to thereby change the output condition stored in a storage unit in advance;
means for comparing a condition value included in the output condition with the acquired internal log data to thereby determine whether or not the output condition is satisfied;
means for outputting a notification signal in a case where it is determined in the determination that the output condition is satisfied; and
means for acquiring setting for allocating at least one of output ports included in the device as an output port for outputting the notification signal in a case where the output condition is satisfied,
wherein means for outputting the notification signal outputs the notification signal for the output condition through the allocated output port in a case where it is determined that the output condition is satisfied.

Statement under Art. 19.1 PCT
Amendment of the claims under Article 19(1) (Rule 46)
International Application No. : PCT/JP2015/083095
International Filing Date: 25.11. 2015 (25 November 2015)
Applicant: MITSUBISHI HEAVY INDUSTRIES, LTD.
Applicant's address: 16-5, Konan 2-chome, Minato-ku, Tokyo 108-8215 Japan
Agents: MORI Ryuichirou, SHIGA Masatake, TAKAHASHI Norio,
 YAMASAKI Tetsuo, MATSUNUMA Yasushi
Agent's Addresses: 1-9-2, Marunouchi, Chiyoda-ku, Tokyo 100-6620 Japan
Agent's Phone No.: +813 5288-5811
Agent's Fax No.: +81 3 5288-5831
Agent's File reference: PC-21109
 Dear Sir/Madam
 The applicant, who received the International Search Report relating to the above-identified International Application transmitted on 19.01. 2016 (19 January 2016), hereby files amendment under Article 19(1) as in the attached sheets.
 Claim 1 is amended so as to combine original Claims 1 and 3. Claim 3 is canceled. Claim 4 is amended so as to depend on Claim 1 and 2. Claim 5 is amended so as to combine original Claims 3 and 5. Claim 6 is amended so as to combine original Claims 3 and 6.
 The applicant also files as attached herewith a brief statement explaining the amendment and indicating any impact that the amendment might have on the description or the drawings.
 Very truly yours,
 / SHIGA Masatake /
 Patent Attorney Attachment:
(1) Amendment under Article 19(1) 3 sheets
(2) Brief Statement 1 sheet
